# EUROPÄISCHE PATENTSCHRIFT

(11) **EP 3 164 879 B1**
(45) Veröffentlichungstag und Bekanntmachung des Hinweises auf die Patenterteilung: **04.03.2020**
(21) Anmeldenummer: 15725055.6
(22) Anmeldetag: 29.05.2015
(51) Int. Cl.: H01H 19/48, B60K 28/14, H01H 1/40, H01H 3/26, H01H 3/56, H01H 9/42, H01H 39/00

(54) **ELEKTRISCHE SCHALTVORRICHTUNG FÜR EINEN ENERGIESPEICHER EINES ELEKTROFAHRZEUGS**
ELECTRIC SWITCHING DEVICE FOR AN ENERGY ACCUMULATOR IN AN ELECTRIC VEHICLE
DISPOSITIF DE COMMUTATION ÉLECTRIQUE POUR UN SYSTÈME DE STOCKAGE D'ÉNERGIE D'UN VÉHICULE ÉLECTRIQUE

(30) Priorität: 04.07.2014 DE 102014109405
(43) Veröffentlichungstag der Anmeldung: 10.05.2017
(73) Patentinhaber: Lion Smart GmbH, 85748 Garching (DE)
(72) Erfinder: MAYER, Tobias, 80805 München (DE); QUINGER, Daniel, 82211 Herrsching (DE); SPECHT, Martin, 82340 Feldafing (DE); SPIRIG, Sebastian, 9443 Widnau (CH); STRAUB, Marcel, 8152 Glattpark (Opfikon) (CH)
(74) Vertreter: Patentanwälte Bals & Vogel
(86) Internationale Anmeldenummer: PCT/EP2015/061997
(87) Internationale Veröffentlichungsnummer: WO 2016/000878

(56) Entgegenhaltungen:
- DE-A1-102008 063 652
- US-A1- 2012 229 234
- US-A1- 2014 131 179

## Beschreibung

Die vorliegende Erfindung betrifft eine elektrische Schaltvorrichtung für einen Energiespeicher eines Elektrofahrzeugs sowie ein Verfahren für das Schalten einer entsprechenden elektrischen Schaltvorrichtung.

Es ist bekannt, dass Schaltvorrichtungen eingesetzt werden, um Energiespeicher von Elektrofahrzeugen ein- und auszuschalten. Ein solcher Energiespeicher kann beispielsweise aus einer Vielzahl von Batteriezellen bestehen. In einem Elektrofahrzeug ist nun ein Elektromotor vorgesehen, der seine Leistung durch eine elektrische Verbindung mit dem Energiespeicher zur Verfügung stellen kann. Insbesondere in Crashsituation, also nach schwerwiegenden Unfällen, ist es notwendig, möglichst in definierter Weise und vor allem auch möglichst schnell den Energiespeicher vom Elektromotor zu trennen. Auch für die normalen Betriebssituationen ist es notwendig, zwischen einem Einschaltzustand und einem Ausschaltzustand den Elektromotor mit dem Energiespeicher zu verbinden bzw. zu trennen. Hierfür weisen bekannte elektrische Schaltvorrichtungen üblicherweise verschiedene Relais auf, die die Schaltvorgänge durchführen können. Da insbesondere während des Einschaltvorgangs zwingend vermieden werden muss, dass sofort die gesamte Leistungsfähigkeit vom Energiespeicher auf den Elektromotor übertragen wird, ist häufig eine sogenannte Vorladeschaltung bzw. eine Vorschalt-Position notwendig. In dieser Vorschalt-Position befindet sich innerhalb des sich ausbildenden Stromkreises noch zusätzlich ein hoher Widerstand, um den sich einstellenden Stromfluss effektiv zu begrenzen. So sind dementsprechend bei bekannten Schaltvorrichtungen sowohl für die Vorschalt-Position als auch für die Einschalt-Position sowie für alle weiteren Schaltpositionen einzelne Relais vorgesehen. Sind in der Schaltvorrichtung zusätzliche Funktionen gewünscht, wie zum Beispiel eine Not-Aus-Situation bzw. ein automatisches Not-Aus-Trennen vom Energiespeicher, so sind hier ebenfalls separate Bauteile vorgesehen. Die Gesamtzahl dieser Bauteile ist üblicherweise in einer sogenannten Battery-Disconnect-Unit (BDU) angeordnet.

Nachteilig bei den bekannten Lösungen ist der hohe Aufwand und die hohe Komplexität bei der Montage. So ist durch die Vielzahl der Bauteile eine Vielzahl von Fehlermöglichkeiten während der Montage grundsätzlich denkbar. Dies führt zu aufwendigen Testverfahren, um die Sicherheit der Funktionalität auch mit geringem Restrisiko gewährleisten zu können. Weiter ist das Baumaß bekannter Schaltvorrichtungen durch die Vielzahl der Einzelbauteile relativ groß. Nicht zuletzt sind auch die Kosten für die Herstellung der bekannten Schaltvorrichtungen relativ hoch, da die Vielzahl der Bauteile jeweils im negativen Sinne die tatsächlichen Kosten der Schaltvorrichtung beeinflusst.

Ferner ist eine Schaltvorrichtung eines elektrischen Bordnetzes für ein Fahrzeug aus der DE 10 2008 063 652 A1 bekannt.

Es ist Aufgabe der vorliegenden Erfindung, die voranstehend beschriebenen Nachteile zumindest teilweise zu beheben. Insbesondere ist es Aufgabe der vorliegenden Erfindung, in kostengünstiger und einfacher Weise den Platzbedarf, das Gewicht und/oder die Kosten der Schaltvorrichtung zu reduzieren.

Voranstehende Aufgabe wird gelöst durch eine elektrische Schaltvorrichtung mit den Merkmalen des Anspruchs 1 sowie ein Verfahren mit den Merkmalen des Anspruchs 16.

Weitere Merkmale und Details der Erfindung ergeben sich aus den Unteransprüchen, der Beschreibung und den Zeichnungen. Dabei gelten Merkmale und Details, die im Zusammenhang mit der erfindungsgemäßen Schaltvorrichtung beschrieben sind, selbstverständlich auch im Zusammenhang mit dem erfindungsgemäßen Verfahren und jeweils umgekehrt, so dass bezüglich der Offenbarung zu den einzelnen Erfindungsaspekten stets wechselseitig Bezug genommen wird bzw. werden kann.

Eine erfindungsgemäße elektrische Schaltvorrichtung für einen Energiespeicher eines Elektrofahrzeugs weist ein Gehäuse auf. In diesem Gehäuse ist wenigstens ein Schaltabschnitt mit zwei Eingangskontakten und wenigstens einem Ausgangskontakt angeordnet. Weiter befindet sich innerhalb des Gehäuses ein Rotationsbauteil, welches relativ zum Gehäuse zwischen wenigstens einer Aus-Position, einer Vorschalt-Position und einer An-Position drehbar um eine Schattachse gelagert ist. Dabei weist das Rotationsbauteil zumindest einen Leiter mit wenigstens zwei Leiterkontakten auf. Die Leiterkontakte und der Leiter sind ausgebildet, in der Vorschalt-Position den ersten Eingangskontakt mit dem Ausgangskontakt und in der An-Position den zweiten Eingangskontakt mit dem Ausgangskontakt des wenigstens einen Schaltabschnittes elektrisch leitend zu verbinden.

Bei einer erfindungsgemäßen Schaltvorrichtung wird also durch das Rotationsbauteil eine doppelte Schaltfunktionalität in einem einzigen Bauteil gewährleistet. Das Rotationsbauteil lässt sich rotieren bzw. drehen und damit können die einzelnen Schaltpositionen hinsichtlich der sich unterscheidenden Winkelposition exakt voneinander unterschieden werden bzw. von dem Rotationsbauteil eingenommen werden. Insbesondere ist das Rotationsbauteil als Hohlzylinder ausgebildet, wobei der Hohlraum innerhalb des Rotationsbauteils zur Aufnahme weiterer Bauteile, insbesondere einen Elektromotors, dient.

Im Vergleich zu den bekannten Schaltvorrichtungen kann nun durch die Anzahl der Eingangskontakte die entsprechende Anzahl von einzelnen Schaltrelais auf ein einziges Bauteil in Form des Rotationsbauteils reduziert werden. Bereits hier wird ersichtlich, dass auf diese Weise eine deutliche Reduktion der Komplexität, des Gewichts und der Abmaße für die erfindungsgemäße Schaltvorrichtung erzielbar ist.

Das Gehäuse kann dabei direkt eine entsprechende Battery-Disconnect-Unit (BDU) ausbilden bzw. ein Teil einer solchen BDU sein. Dementsprechend befindet sich die Schaltvorrichtung zwischen dem Energiespeicher und dem Elektromotor und damit sozusagen innerhalb des elektrischen Antriebstrangs. Damit wird es möglich, dass die drei Positionen für das Rotationsbauteil die folgenden unterschiedlichen elektrischen Wirkungsweisen als Funktion mit sich bringen. In der Aus-Position befindet sich das Rotationsbauteil in einer elektrisch isolierenden Position, so dass der Ausgangskontakt mit keinem der Eingangskontakte elektrisch leitend verbunden ist. Das bedeutet, dass der Stromkreis getrennt ist und damit der Elektromotor keine elektrisch leitende Verbindung zum Energiespeicher aufweist. Wird das Rotationsbauteil rotatorisch weiterbewegt in die Vorschalt-Position, entsteht eine leitende Verbindung zwischen dem ersten Eingangskontakt und dem Ausgangskontakt. Der erste Eingangskontakt ist dabei vorzugsweise in seiner weiteren elektrisch leitenden Verbindung mit einem Vorschaltwiderstand verbunden, so dass sich nun der Stromkreis zu dem Elektromotor vom Energiespeicher über diesen Vorschaltwiderstand schließen lässt, Das bedeutet, dass durch den Vorschaltwiderstand der Anlaufstrom des Elektromotors während des Einschaltens deutlich begrenzt wird. Selbstverständlich kann der entsprechende Widerstand auch als variabler Widerstand ausgebildet sein, um hier eine elektrofahrzeugspezifische oder sogar schaltsituationsspezifische Anpassung dieser Begrenzung vornehmen zu können. In dieser Position befindet sich das Rotationsbauteil also in der Vorschalt-Position.

Wird das Rotationsbauteil weiter rotiert, so bildet sich eine komplette elektrisch leitende Verbindung zwischen dem zweiten Eingangskontakt und dem Ausgangskontakt aus. Dies ist die normale Einsatzsituation bzw. Betriebssituation, in welcher ohne zusätzlichen Widerstand eine elektrisch leitende Verbindung zwischen dem Energiespeicher und dem Elektromotor besteht. Damit kann selbstverständlich trotzdem auch der Vorschaltwiderstand weiter bestromt werden, wobei jedoch durch den hohen Widerstand die hauptsächliche Menge des Stromflusses an dem Widerstand vorbei aus dem zweiten Eingangskontakt heraus erfolgt.

Durch die erfindungsgemäße Ausbildung wird nicht nur eine Reduktion der Bauteile und damit der Kosten, des Platzes und des Gewichts erzielt, sondern darüber hinaus ein Vorteil hinsichtlich der Schaltsicherheit ermöglicht. Das bedeutet, dass beim Einschalten durch die Rotationsbewegung zwangsläufig die Vorschalt-Position automatisch durchlaufen wird, bevor die An-Position vom Rotationsbauteil eingenommen werden kann. Das bedeutet also, dass aus mechanischer bzw. geometrischer Korrelation kein Überspringen der Vorschalt-Position mehr möglich ist, so dass dementsprechend eine damit einhergehende Schädigung des Elektromotors und/oder des Energiespeichers durch ein Auslassen der Vorschalt-Position bei bekannten Schaltvorrichtungen gänzlich ausgeschlossen ist. Damit wird ersichtlich, dass neben den konstruktiven Vorteilen auch eine erhöhte Funktionssicherheit durch eine erfindungsgemäße Schaltvorrichtung sichergestellt wird.

Es ist noch darauf hinzuweisen, dass ein Energiespeicher im Sinne der vorliegenden Erfindung nur beispielsweise als eine Vielzahl von Batteriezellen ausgebildet ist. Selbstverständlich können auch andere Energiespeicher, wie Kondensatoren, Rekuperationssysteme, Schwungräder oder auch elektrischen Strom erzeugende Brennstoffzellen, im Sinne der vorliegenden Erfindung als Energiespeicher angesehen werden.

Ein weiterer Vorteil durch das erfindungsgemäße Rotationsbauteil ist die vereinfachte Ansteuerung. So kann insbesondere hinsichtlich der Durchführung der Rotationsbewegung bzw. sogar der Fixierung des Rotationsbauteils in der jeweiligen Schaltposition eine erleichterte Antriebsmöglichkeit gefunden werden. Wie später noch näher erläutert wird, kann hier zum Beispiel ein magnetischer Antrieb und/oder ein elektromotorischer Antrieb zum Einsatz kommen.

Die einzelnen Kontakte, also die Leiterkontakte, die Eingangskontakte und der wenigstens eine Ausgangskontakt liegen dabei auf entsprechend unterschiedlichen Umfangspositionen auf einer gemeinsamen Umfangslinie bezogen auf die Schaltachse des Rotationsbauteils. Damit wird sichergestellt, dass durch gleitende Bewegung und dementsprechend konstante Kontaktierung des Rotationsbauteils mit einem umgebenden Kontaktbauteil immer die entsprechende elektrische Kontaktierung gemäß der eingenommenen Schaltposition auch tatsächlich erreicht wird. Das bedeutet, dass sozusagen die Kontakte aneinander reiben und damit zusätzlich ein Reinigungseffekt für die einzelnen Oberflächen der jeweiligen Kontakte zur Verfügung gestellt wird. Durch die erfindungsgemäße rotatorische Ausbildung des Rotationsbauteils wird es darüber hinaus möglich, den Leiter zwischen den Leiterkontakten im Wesentlichen beliebig geometrisch entlang oder innerhalb des Rotationsbauteils zu verlegen. Das ermöglicht es, dass innerhalb des Rotationsbauteils, insbesondere in dessen inneren Hohlraum, ein freies Volumen entsteht, welches für weitere Bauteile eingesetzt werden kann, Solche weiteren Bauteile für den Innenraum bzw. das Innenvolumen des Rotationsbauteils sind zum Beispiel eine Antriebsvorrichtung, eine Rückstellvorrichtung oder ein später noch näher erläutertes Getriebe.

Als Leiter kommen insbesondere metallische Werkstoffe zum Einsatz. Aus Kostengründen wird insbesondere ein Kupferdraht verwendet, jedoch können auch andere metallische und elektrisch leitende Materialien, wie zum Beispiel Aluminium oder Ähnliches, verwendet werden. Selbstverständlich ist es auch möglich, dass zusätzlich noch weitere Schaltpositionen zu den beschriebenen drei Schaltpositionen vom Rotationsbauteil eingenommen werden können. So kann beispielsweise eine Not-Aus-Schaltsituation und/oder eine Crash-Aus-Schaltsituation vorgesehen sein, welche insbesondere zusätzliche leitende Kontaktierungen mit entsprechenden Eingangskontakten bzw. Ausgangskontakten gewährleisten. Damit kann über das Rotationsbauteil eine sehr große Anzahl von Schaltpositionen eingenommen werden, welche entsprechend unterschiedlichen Funktionen des elektrischen Stromkreises entsprechen, ohne die Komplexität hinsichtlich der Schaltvorgänge in irgendeiner Weise zu verändern bzw. zu erhöhen. Insbesondere aufgrund der Tatsache, dass in einer Volllastsituation Ströme im Bereich von ca. 600 A durch die erfindungsgemäße elektrische Schaltvorrichtung fließen, wird durch die rotatorische Schaltfunktion und die entsprechende Reduktion der Bauteile ein deutlicher Vorteil erzielt.

Zusätzlich ist es von Vorteil, dass beim Ausschalten aus der An-Position eine Rotationsbewegung stattfindet, wodurch ein seitliches Trennen des jeweiligen Leiterkontaktes und des jeweiligen Eingangskontakts bzw. Ausgangskontaktes erfolgt, Beim Trennen unter Volllast, wie es bei einer Not-Aus-Situation oder in einer Crashsituation erfolgen kann, erfolgt dieses Trennen häufig bzw. fast immer unter Ausbildung eines Lichtbogens. Durch die Tatsache, dass die Rotationsbewegung diesen Lichtbogen sozusagen in einen engen Spalt seitlich von dem jeweiligen Kontakt hineinzieht, wird ein reduzierter Raum für diesen Lichtbogen zur Verfügung gestellt. Durch diese Spaltausbildung und das Hineinziehen des Lichtbogens in diesen Spalt wird durch die geringe Raumzurverfügungstellung der Lichtbogen klein gehalten und schnell wieder verlöscht. Der Spalt, in welchen dieser Lichtbogen hineingezogen wird, kann auch als Löschspalt bzw. Lichtbogenspalt im Sinne der vorliegenden Erfindung bezeichnet werden.

Es kann von Vorteil sein, wenn bei einer elektrischen Schaltvorrichtung gemäß der vorliegenden Erfindung eine Antriebsvorrichtung, insbesondere aufweisend einen Elektromotor, für das Rotieren des Rotationsbauteils vorgesehen ist. Das bedeutet, dass neben einer grundsätzlich auch möglichen manuellen Rotationsmöglichkeit für das Rotationsbauteil hier eine automatisierte Betätigungs- und Schaltmöglichkeit gegeben wird. Durch Bestromung der Antriebsvorrichtung, insbesondere durch entsprechende Bestromung des Elektromotors, wird die Rotationsbewegung durchgeführt und eine entsprechende Variation der Schaltposition des Rotationsbauteils erzwungen. Dahinter kann eine entsprechende Regelung und/oder Steuerung liegen, um die Antriebsvorrichtung anhand der jeweils gewünschten bzw. notwendigen Schaltposition zu kontrollieren. Selbstverständlich ist eine elektromotorische Ausbildung der Antriebsvorrichtung nur eine Möglichkeit. So sind auch elektromagnetische Antriebsvorrichtungen denkbar, wie sie im nachfolgenden Absatz noch näher erläutert werden. Ein großer Vorteil ist es, wenn die Antriebsvorrichtung als elektrisch betriebene Antriebsvorrichtung ausgebildet ist, so dass sie sozusagen zusammenhängt mit dem Stromkreis bzw. dem grundsätzlichen Vorhandensein einer Bestromung innerhalb des Elektrofahrzeugs. Damit kann sichergestellt werden, dass zum Beispiel im Zusammenspiel mit der später noch näher erläuterten Rückstellvorrichtung aus mechanischer Sicht eine automatische Rückstellung erfolgt, wenn das ganze System sich stromlos schalten lässt bzw. durch einen Crash stromlos wird.

Vorteilhaft ist es darüber hinaus, wenn bei einer elektrischen Schaltvorrichtung gemäß dem voranstehenden Absatz die Antriebsvorrichtung einen Hubmagneten und eine Umsetzvorrichtung für die Umsetzung einer Translationsbewegung des Hubmagneten in eine Rotationsbewegung des Rotationsbauteils aufweist. Dabei handelt es sich um eine besonders vorteilhafte, weil einfache und kostengünstige Lösung für die Antriebsvorrichtung. Ein Hubmagnet kann dabei vorzugsweise eine translatorische Bewegung durchführen, wobei die Umsetzvorrichtung zum Beispiel eine schräge Kante oder eine schneckenförmige Wellenausbildung aufweisen kann. Das bedeutet, dass durch die Translationsbewegung nun eine entsprechende Führungsfunktionalität durch die Umsetzvorrichtung gewährleistet wird, welche diese Translationsbewegung in eine Rotationsbewegung des Rotationsbauteils umsetzt. Dies ermöglicht es, neben einer kostengünstigen und einfachen Ausbildung der Antriebsvorrichtung, insbesondere hinsichtlich der Standardbetriebssituation eine reduzierte Haltekraft zu gewährleisten. So kann beispielsweise nach der Bewegung in die An-Position eine einfache und geringe Haltekraft ausreichen, um auch gegen eine starke Rückstellfeder den Hubmagneten in der entsprechenden An-Position bzw. der korrelierenden Translationsposition zu halten. Nicht zuletzt ist darüber hinaus auch die Regelung der einzelnen Schaltvorgänge bei einer solchen Ausführungsform besonders einfach und kostengünstig durchführbar.

Vorteilhaft ist es weiter, wenn bei einer erfindungsgemäßen elektrischen Schaltvorrichtung die Leiterkontakte, die Eingangskontakte und/oder der Ausgangskontakt als flächige Kontaktabschnitte ausgebildet sind für eine elektrische Kontaktierung durch den Leiter in wenigstens zwei Rotationspositionen des Rotationsbauteils. Dies führt zu einer größeren Übertragungsfläche für den elektrischen Strom, so dass der Kontaktierungswiderstand in Summe sinkt. Insbesondere für das Übertragen großer Strommengen sind hier entsprechend große flächige Kontaktabschnitte vorgesehen. Die flächigen Kontaktabschnitte können dabei im Wesentlichen zylindermantelförmig ausgebildet sein. Selbstverständlich sind jedoch auch komplexere mantelförmige Abschnitte, zum Beispiel die später noch näher erläuterten kammförmigen Ausbildungen der flächigen Kontaktabschnitte, im Sinne der vorliegenden Erfindung denkbar. Es wird also jeweils eine Drehwinkelfläche zur Verfügung gestellt, um die jeweilige Kontaktierung in den unterschiedlichen Schaltpositionen eindeutig vorab definieren und später einnehmen zu können. Durch das flächige Kontaktieren wird darüber hinaus eine entsprechende Reibungskraft während der Schaltbewegung zur Verfügung gestellt. Mit anderen Worten reiben die flächigen Kontaktabschnitte der einzelnen Kontakte während der Schaltbewegung aneinander, so dass sozusagen eine Schleifbewegung während der Schaltbewegung zur Verfügung gestellt wird. Dies führt dazu, dass zusätzlich eine Reinigungsfunktionalität gewährleistet wird, um Rußpartikel oder ähnliche Abnutzungserscheinungen auf den Kontaktabschnitten zu vermeiden bzw. wieder zu entfernen. Die Kontaktabschnitte können dabei sowohl komplett flächig aneinander anliegen oder Punktkontaktierungen aufweisen. Bevorzugt sind Zweipunktkontaktierungen bzw. Vierpunktkontaktierungen, wobei dementsprechend jeweils ein Punkt an der Innenseite und ein Punkt an der Außenseite bzw. zwei Punkte an der Innenseite und zwei Punkte an der Außenseite den entsprechenden Kontakt herstellen.

Weiter kann es von Vorteil sein, wenn bei einer erfindungsgemäßen elektrischen Schaltvorrichtung die Leiterkontakte und/oder die Eingangskontakte und/oder der Ausgangskontakt Vorspannmittel aufweisen für eine vorgespannte Kontaktierung zwischen dem Ausgangskontakt und einem Leiterkontakt und/oder zwischen einem Eingangskontakt und einem Leiterkontakt. Diese Vorspannung bedeutet also, dass die Radialkraft, welche radial auf die Schaltachse zu oder von dieser weg wirkt, eine entsprechende Vorspannung der einzelnen Kontaktflächen zueinander erlaubt. Es können aktive Vorspannmittel, zum Beispiel unter der Verwendung von Federvorrichtungen vorgesehen sein, welche in aktiver Weise durch entsprechende Federkraft die einzelnen Kontakte gegeneinanderdrücken. Auch geometrische Ausbildungen entsprechender Vorspannmittel, zum Beispiel durch keilförmige Ausbildung, sind im Sinne der vorliegenden Erfindung möglich. Mit anderen Worten wird durch das Vorspannmittel darüber hinaus sozusagen eine Nachrück- bzw. Nachstellmöglichkeit zur Verfügung gestellt, welche bei Abnutzung der einzelnen Kontaktabschnitte der leitenden Kontakte die gewünschte elektrisch leitfähige Kontaktierung mit hoher Sicherheit weiterhin zur Verfügung stellt.

Darüber hinaus kann es von Vorteil sein, wenn bei einer erfindungsgemäßen elektrischen Schaltvorrichtung das Rotationsbauteil eine mechanische Rückstellvorrichtung, insbesondere in Form einer Federvorrichtung, aufweist für eine Beaufschlagung des Rotationsbauteils mit einer Rückstellkraft in Richtung der Aus-Position. Insbesondere handelt es sich also um eine Federkraft, welche von der mechanischen Rückstellvorrichtung zur Verfügung gestellt wird. Mit anderen Worten bedeutet dies, dass ohne jegliche zusätzliche Krafteinwirkung die Rückstellvorrichtung das Rotationsbauteil immer wieder in Richtung der Aus-Position zurückbewegt, Insbesondere ist ein entsprechender Anschlag vorgesehen, welcher die Rückbewegung des Rotationsbauteils auf die Aus-Position begrenzt. Dies führt dazu, dass in einer stromfreien Situation, also wenn keinerlei bestromter mechanischer Antrieb das Rotationsbauteil mehr in einer anderen Position hält oder in eine andere Position bewegt, die mechanisch ausgebildete Rückstellvorrichtung das Rotationsbauteil automatisch und sicher in die Aus-Position zurückbewegt. In Not-Aus-Situationen oder Crashsituationen wird dementsprechend hier eine zusätzliche Funktionalität gewährleistet, welche die Sicherheit der erfindungsgemäßen elektrischen Schaltvorrichtung erhöht. Eine solche entsprechende Rückstellvorrichtung, insbesondere in Form einer Federvorrichtung, kann zum Beispiel direkt als Drehfeder ausgebildet sein, um in direkter Einwirkungsweise eine Rotationskraft für die Rückrotation des Rotationsbauteils zur Verfügung stellen zu können. Die Abstützung der mechanischen Rückstellvorrichtung für die entsprechende Rückstellkraft ist bevorzugt an dem entsprechenden Gehäuse der Schaltvorrichtung vorgesehen.

Vorteilhaft ist es darüber hinaus, wenn bei einer erfindungsgemäßen elektrischen Schaltvorrichtung in dem Gehäuse wenigstens zwei Schaltabschnitte in Richtung der Schaltachse axial versetzt zueinander angeordnet sind. So kann es vorteilhaft sein, wenn zwei oder mehr Schaltabschnitte entsprechend innerhalb eines einzigen Stromkreises eine erhöhte Schaltsicherheit zur Verfügung stellen. Auch ist es möglich, dass mit einem einzigen Rotationsbauteil eine Mehrzahl von zwei oder beliebig vielen separaten Stromkreisen automatisch gemeinsam geschaltet wird. Dabei können die einzelnen Schaltabschnitte die einzelnen Schaltpositionen in identischer und korrelierter Weise aufweisen. Das bedeutet, dass bei der Bewegung des ersten Schaltabschnitts in die Vorschait-Position entsprechend auch der zweite Schaltabschnitt in die Vorschalt-Position bewegt wird. Gleiches gilt für die Weiterbewegung in die An-Position oder die Rückbewegung in die Aus-Position. Selbstverständlich ist es auch denkbar, dass die Schaltabschnitte unterschiedliche Verbraucher ansteuern und damit eine gewünschte mechanische definierte Korrelation zwischen unterschiedlichen Schaltpositionen gewünscht ist. So kann durch entsprechenden Umfangsversatz der entsprechenden Kontakte der Schaltabschnitte sichergestellt sein, dass beispielsweise der erste Schaltabschnitt nur dann in der An-Position sein kann, wenn der zweite Schaltabschnitt sich in Aus-Position befindet und umgekehrt. Neben einer weiteren Reduktion von Bauteilen, Gewicht und Kosten, können auch im Wesentlichen beliebig komplexe Schaltungen der einzelnen Schaltphasen durch eine derartige Ausführungsform einfach und kostengünstig erzielt werden.

Vorteilhaft ist es weiter, wenn bei einer erfindungsgemäßen elektrischen Schaltvorrichtung eine Notschaltvorrichtung vorgesehen ist für ein hochenergetisches, insbesondere pyrotechnisches Trennen der elektrisch leitenden Verbindung durch den Leiter mittels einer Bewegung des Rotationsbauteils, deren Bewegungsrichtung sich vorzugsweise von einer Rotation um die Schaltachse unterscheidet. Insbesondere in einer Notsituation oder einer Crashsituation kann es notwendig sein, möglichst schnell und vor allem mit höchster Sicherheit den Stromkreis zwischen dem Energiespeicher und dem Verbraucher in Form des Elektromotors zu trennen. Ein hochenergetisches Trennen erlaubt dies insbesondere in irreversibler einmaliger Weise, so dass zum Beispiel mithilfe eines pyrotechnischen Antriebes die Notschaltvorrichtung das Rotationsbauteil entlang seiner Schaltachse translatorisch bewegt. Durch diesen Axialversatz in translatorischer Richtung geraten die entsprechenden Kontakte automatisch aus ihrer leitenden Verbindung, so dass die Stromkreise sicher und wirkungsvoll getrennt werden. Selbstverständlich kann die hochenergetische Trennung jedoch auch andere Bewegungsformen, insbesondere auch eine rotatorische Bewegungsform, aufweisen, so dass auch eine Rückrotation in die Aus-Position hochenergetisch, insbesondere pyrotechnisch, gewährleistet werden kann. Neben pyrotechnischen Lösungen können auch starke Federvorrichtungen oder Druckluft im Sinne dieser Ausführungsform der Erfindung eingesetzt werden. Damit kann ein zusätzliches Bauteil, nämlich die separate Notschaltvorrichtung in Form der bekannten sogenannten Cable-Cutter, welche pyrotechnisch den Stromkreis durchschneiden, vermieden werden, wodurch weitere Komplexitäts- und Kostenreduktionen erzielbar sind.

Vorteilhaft ist es ebenfalls, dass bei der erfindungsgemäßen elektrischen Schaltvorrichtung zwischen einer Antriebsvorrichtung für das Rotationsbauteil und dem Rotationsbauteil eine elektrische Kupplungsvorrichtung angeordnet ist, welche eine Bewegung des Rotationsbauteils in Richtung der Aus-Position unter Bestromung sperrt und ohne Bestromung freigibt. Eine solche Kupplungsvorrichtung erlaubt es also, dass die Antriebsvorrichtung unter Stromfluss automatisch eine Bewegung in Richtung der An-Positon durchführt. Fällt der Strom, zum Beispiel durch eine Notschaltposition oder eine Crashsituation aus, so führt dies dazu, dass sich die Kupplungsvorrichtung öffnet und automatisch die Bewegung des Rotationsbauteils in Richtung der Aus-Position freigibt. In der Normalsituation hält die Kupplungsvorrichtung also mit möglichst geringer Kraft die jeweils eingenommene Schaltposition, während ohne die Bestromung insbesondere in Korrelation mit einer mechanischen Rückstellvorrichtung die Rückstellbewegung des Rotationsbauteils sozusagen automatisch durch die fehlende Bestromung freigegeben wird. Die Verlustleistung, welche durch die elektrische Kupplungsvorrichtung nun als Haltekraft während des normalen Einsatzes notwendig ist, ist deutlich geringer, als dies bei einer vollständigen Bestromung, zum Beispiel eines Elektromotors, wäre, der gegen die mechanische RücksteHvorrichtung anarbeiten müsste.

Vorteilhaft ist es ebenfalls, wenn bei einer erfindungsgemäßen elektrischen Schaltvorrichtung die Kupplungsvorrichtung eine Freilaufvorrichtung für die Antriebsvorrichtung aufweist, welche die Antriebskraft der Antriebsvorrichtung für eine Rotation in Richtung der An-Position überträgt und in der Gegenrichtung einen Freilauf für die Antriebsvorrichtung vorgibt. Dies führt zu einer weiteren Verbesserung, so dass immer eine aktive Bewegung in die An-Position ermöglicht wird. Ein Ausschalten ist dann immer nur über die Rückstellvorrichtung möglich, insbesondere durch Ausschalten der Bestromung der entsprechenden elektrischen Kupplungsvorrichtung. Dies führt einen Teil der sicherheitsrelevanten Funktionalität weiter in die mechanische Funktion des Freilaufs, wodurch eine darüber hinausgehende Unabhängigkeit von einer Regelungstechnik gewährleistet werden kann.

Ein weiterer Vorteil kann es sein, wenn bei einer erfindungsgemäßen elektrischen Schaltvorrichtung die Kupplungsvorrichtung ein Getriebe, insbesondere in Form eines Planetengetriebes, aufweist für die Übertragung einer Antriebskraft der Antriebsvorrichtung auf das Rotationsbauteil. Dieses Getriebe erlaubt es, insbesondere in einer Anordnung zwischen einer entsprechenden motorischen Antriebsvorrichtung einerseits und dem Rotationsbauteil andererseits, auch mit kleineren und schneller oder langsamer drehenden Motoren zu arbeiten. Darüber hinaus kann durch die entsprechende Kupplung eine elektromechanische Magnetvorrichtung eine axial und seitlich versetzte Blockade zur Verfügung stellen, welche ebenfalls eine deutliche Reduktion der Haltekraft mit sich bringt.

Vorteilhaft ist es ebenfalls, wenn bei einer erfindungsgemäßen elektrischen Schaltvorrichtung das Rotationsbauteil wenigstens abschnittsweise aus einem leitenden Material ausgebildet ist, wobei die Leiterkontakte durch das Anordnen von elektrisch isolierendem Material neben den Leiterkontakten ausgebildet werden. Dies führt zu einer Reduktion des Herstellaufwandes sowie der Herstellkosten. Elektrisch isolierendes Material kann zum Beispiel eine Kunststoffbeschichtung sein, welche dementsprechend aus einer einstückigen Ausbildung des Rotationsbauteils die definierten Leiter bzw. die definierten Leiterkontakte freigibt. Dabei können unterschiedlichste Beschichtungsmethoden und Beschichtungsmaterialien im Sinne der vorliegenden Erfindung eingesetzt werden. Auch ein nachträgliches Einsetzen des Leiters in einen entsprechenden Isolator des Rotationsbauteils ist im Sinne dieser Ausführungsform denkbar.

Bei einer erfindungsgemäßen elektrischen Schaltvorrichtung kann es weiter von Vorteil sein, wenn der wenigstens eine Schaltabschnitt zumindest einen dritten Eingangskontakt und/oder zumindest einen zweiten Ausgangskontakt aufweist für eine elektrisch leitende Verbindung mittels dem Leiter mit einem lichtbogenlöschenden elektrischen Bauteil, insbesondere einem der folgenden:
- Freilaufdiode
- Schmelzsicherung
- Widerstand

Bei der voranstehenden Aufzählung handelt es sich um eine nicht abschließende Liste. In einer Not-Aus-Schaltsituation wird der bereits erläuterte Lichtbogen erzeugt, wenn sich die Kontakte voneinander trennen. Um den durch den Lichtbogen erzielten Energieaufbau zu reduzieren und insbesondere die angeschlossenen elektronischen und elektrischen Bauteile zu schützen, kann dieses lichtbogenlöschende, elektrische Bauteil nun eine entsprechende Energiereduktion zur Verfügung stellen. Dies kann zum Beispiel durch das Schmelzen der Sicherung, durch das aktive Erwärmen eines Widerstandes oder die entsprechende Energieabbaumöglichkeit einer Diode gewährleistet werden.

Bei einer erfindungsgemäßen elektrischen Schaltvorrichtung ist es weiter vorteilhaft, wenn der Leiter wenigstens abschnittsweise, insbesondere vollständig, entlang der Umfangsrichtung des Rotationsbauteils zwischen den Leiterkontakten ausgerichtet ist. Wie bereits erläutert worden ist, kann erfindungsgemäß der Leiter im Wesentlichen frei innerhalb des Rotationsbauteils platziert werden. Entlang der Umfangsrichtung und insbesondere direkt angeordnet am Umfang des Rotationsbauteils führt diese Konstruktion dazu, dass der Leiter den Innenraum und damit das Innenvolumen des Rotationsbauteils freilässt bzw. freigibt. Innerhalb dieses Innenraums kann nun eine Vielzahl unterschiedlicher Bauteile, zum Beispiel eine Antriebsvorrichtung, das Getriebe, die Rückstellvorrichtung oder Ähnliches angeordnet werden. Insbesondere durch die komplett am Umfang ausgebildete Leiterkonstruktion wird entsprechend die Kontaktierung noch verbessert, wie dies später noch mit Bezug auf die kammartigen Abschnitte erläutert werden wird.

Vorteilhaft kann es auch sein, wenn bei einer erfindungsgemäßen elektrischen Schaltvorrichtung der Leiter einen Messabschnitt aufweist mit einem definierten elektrischen Widerstand, wobei eine Messvorrichtung für die Bestimmung des elektrischen Stroms im Messabschnitt vorgesehen ist. Dies erlaubt es, zum Beispiel durch Ausbildung einer expliziten Dünnstelle, die tatsächliche Fließsituation elektrischen Stroms durch die Schaltvorrichtung zu erkennen. Ein definierter Widerstand in dieser Dünnstelle kann unter Kenntnis der Temperaturabhängigkeit dieses Widerstandes einen solchen Messabschnitt zur Verfügung stellen. Dies ermöglicht es separate Messvorrichtungen zu vermeiden, so dass zusätzlich eine Kostenreduktion und eine Bauteilreduktion erzielbar werden.

Vorteilhaft ist es ebenfalls, wenn bei einer erfindungsgemäßen elektrischen Schaltvorrichtung die Leiterkontakte des Rotationsbauteils zumindest abschnittsweise eine kammartige Struktur aufweisen, welche mit einer kammartigen Struktur der Eingangskontakte und dem wenigstens einen Ausgangskontakt kontaktierend kämmen. Diese kammartige Struktur kann zum Beispiel eine im Querschnitt trapezförmige Ausbildung aufweisen, so dass schräge Flächen entlang ihrer Umfangsrichtung kämmend und gleitend aneinander vorbeibewegt werden können. Dies führt dazu, dass hinsichtlich der axialen Erstreckung in Summe eine deutlich größere Fläche eines elektrisch leitenden Kontaktabschnitts zwischen den Kontakten zur Verfügung gestellt werden kann. Gleichzeitig wird sichergestellt, dass auch über eine Vielzahl von Nutzungen und dementsprechend auch durch den erzwungenen Abrieb zwischen den einzelnen Bauteilen ein elektrisch leitender Kontakt zwischen den einzelnen Kontakten mit hoher Sicherheit, insbesondere durch eine entsprechende Vorspannvorrichtung, sichergestellt wird. Für die Montage bzw. Fertigung einer solchen kammartigen Struktur können zum Beispiel axial aufeinanderfolgende, unterschiedlich radial erstreckende Scheiben eingesetzt werden. Die Kontaktierung erfolgt dabei vorzugsweise nur an den seitlichen Kammflächen, so dass der Grund des jeweiligen Kamms frei bleibt und damit berührungslos ausgebildet ist.

Ein weiterer Gegenstand der vorliegenden Erfindung ist ein Verfahren für das Schalten einer elektrischen Schaltvorrichtung, insbesondere gemäß der vorliegenden Erfindung, für einen Energiespeicher eines Elektrofahrzeugs, aufweisend die folgenden Schritte:
- Überwachen der Aktivitätssituation des Elektrofahrzeugs auf ein Erkennen von einem Normalzustand, einem Notzustand und einem Crashzustand des Elektrofahrzeugs,
- Bewegen eines Rotationsbauteils in eine Aus-Position bei erkanntem Notzustand oder Crashzustand

Bei einem erfindungsgemäßen Verfahren werden demnach die gleichen Vorteile erzielt, wie sie ausführlich mit Bezug auf eine erfindungsgemäße Schaltvorrichtung erläutert worden sind.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen schematisch:
- Fig. 1: eine Ausführungsform einer erfindungsgemäßen Schaltvorrichtung in Aus-Position,
- Fig. 2: die Ausführungsform der Fig. 1 in Vorschalt-Position,
- Fig. 3: die Ausführungsform der Fig. 1 und 2 in An-Position,
- Fig. 4: eine weitere Ausführungsform einer erfindungsgemäßen Schaltvorrichtung,
- Fig. 5: die Ausführungsform der Fig. 4 in einem anderen Querschnitt,
- Fig. 6: die Ausführungsform der Fig. 4 und 5 in einem anderen Querschnitt,
- Fig. 7: eine Möglichkeit einer Antriebsvorrichtung und
- Fig. 8: die Ausführungsform der Antriebsvorrichtung der Fig. 7 in anderem Betriebszustand.

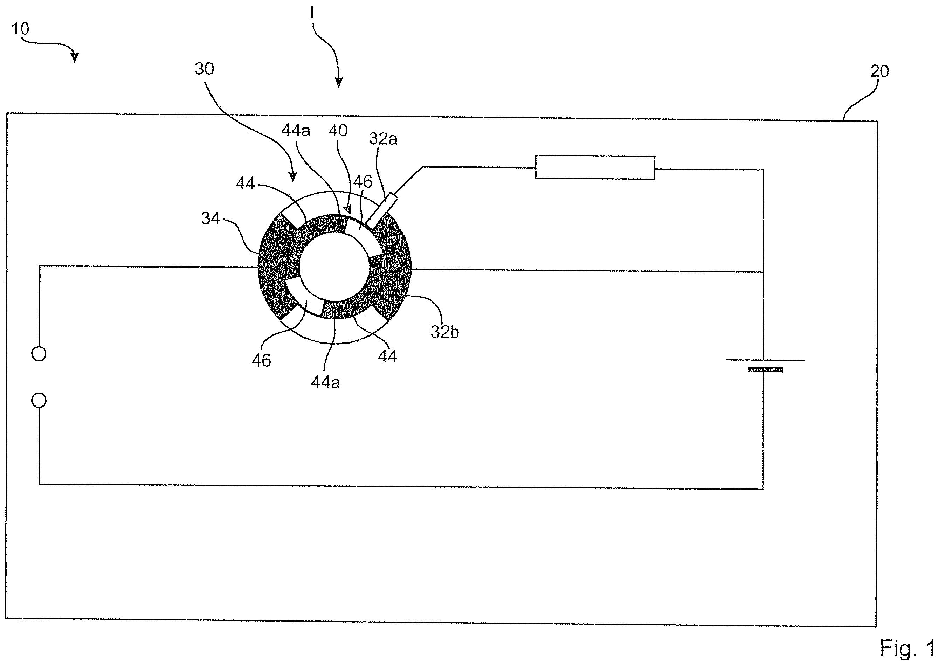

Die Fig. 1 bis 3 zeigen schematisch, wie eine Schaltsituation in einer elektrischen Schaltvorrichtung 10 innerhalb eines Gehäuses 20 geändert werden kann. Prinzipiell ist am rechten Ende ein Energiespeicher in Form einer Stromquelle zu erkennen, während am linken Ende mit den beiden Kreisen ein Verbraucher, zum Beispiel in Form eines Elektromotors eines Elektrofahrzeugs, angeordnet ist. Die Schaltvorrichtung 10 zum Schalten ist dabei hier mit einem Rotationsbauteil 30 versehen, welches sich in Fig. 1 in der Aus-Position I befindet. Das bedeutet, dass das Rotationsbauteil 30 mit seinen Leitern 44, welche hier redundant oben und unten ausgebildet sind, sich in einer Rotationsposition befindet, in welcher elektrisch isolierendes Material 46 die entsprechenden Leiterkontakte 44a von dem Ausgangskontakt 34 bzw. den beiden Eingangskontakten 32a und 32b trennt. Damit ist sichergestellt, dass der Stromkreis auf jeden Fall geöffnet ist.

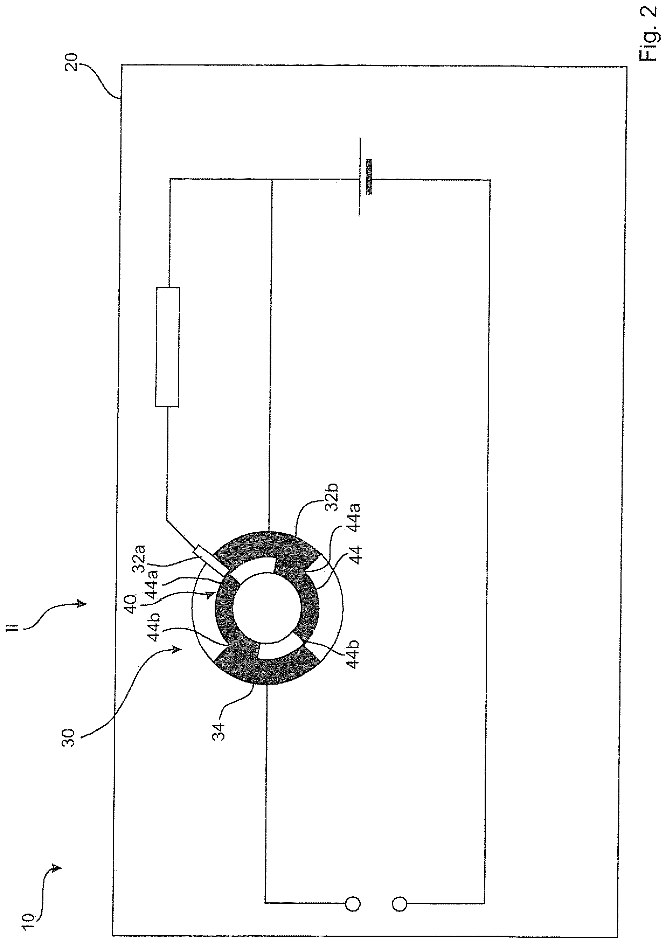

Wird nun ein Einschalten gewünscht, so bewegt sich das Rotationsbauteil 40 des Schaltabschnitts 30 im Uhrzeigersinn in eine Position gemäß Fig. 2. Hier ist die Vorschalt-Position II dargestellt. Das bedeutet, dass hier der jeweilige Leiterkontakt 44a und 44b des unteren Leiters 44 noch keinen Kontakt mit dem Ausgangskontakt 34 aufnimmt. Jedoch befindet sich der rechte Leiterkontakt 44a des oberen Leiters 44 bereits im elektrisch leitenden Kontakt mit dem ersten Eingangskontakt 32a, so dass der Stromkreis nun über den großen Widerstand oben rechts in einer ersten Schließposition angeordnet ist. Über diesen Widerstand wird sichergestellt, dass ein Stromfluss nicht unerwünschte Größen erreicht.

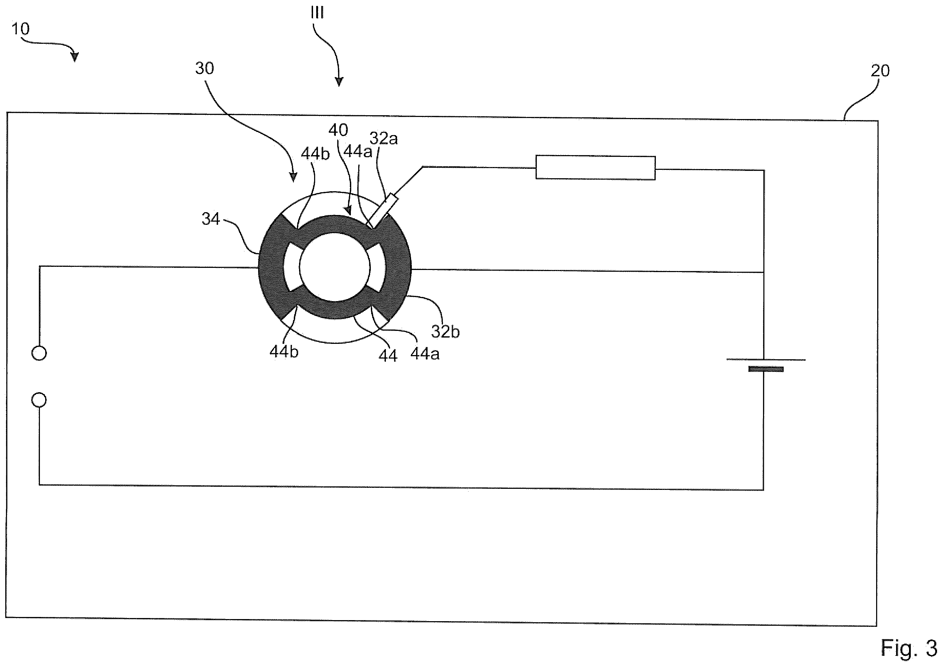

Wird nun die Rotationsbewegung des Rotationsbauteils 40 weiter durchgeführt, so wird die An-Position III gemäß der Fig. 3 erreicht. Hier befinden sich nun beide Leiter 44 mit beiden Leiterkontakten 44a und 44b in elektrisch leitfähigem Kontakt mit dem zweiten Eingangskontakt 32b und dem Ausgangskontakt 34, so dass hier nun die normale Betriebssituation mit geschlossenem Stromkreis dargestellt ist.

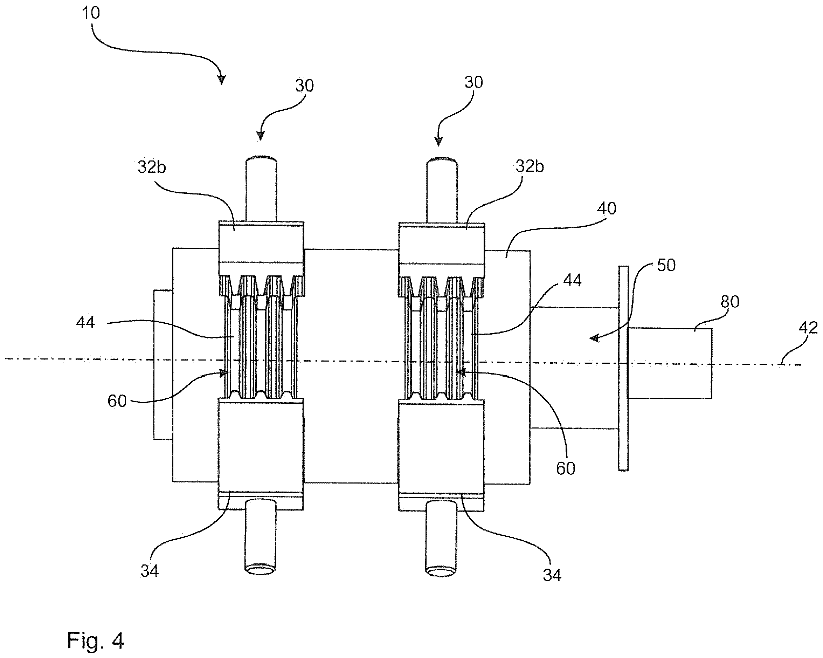

Die Fig. 4 bis 6 zeigen eine weitere Ausführungsform einer elektrischen Schaltvorrichtung 10, wobei hier zwei axial versetzte, parallel angeordnete Schaltabschnitte 30 vorgesehen sind. Diese sind mit identischen Schaltpositionen versehen, so dass ein paralleles und damit gemeinsames Schalten der Schaltabschnitte 30 möglich wird.

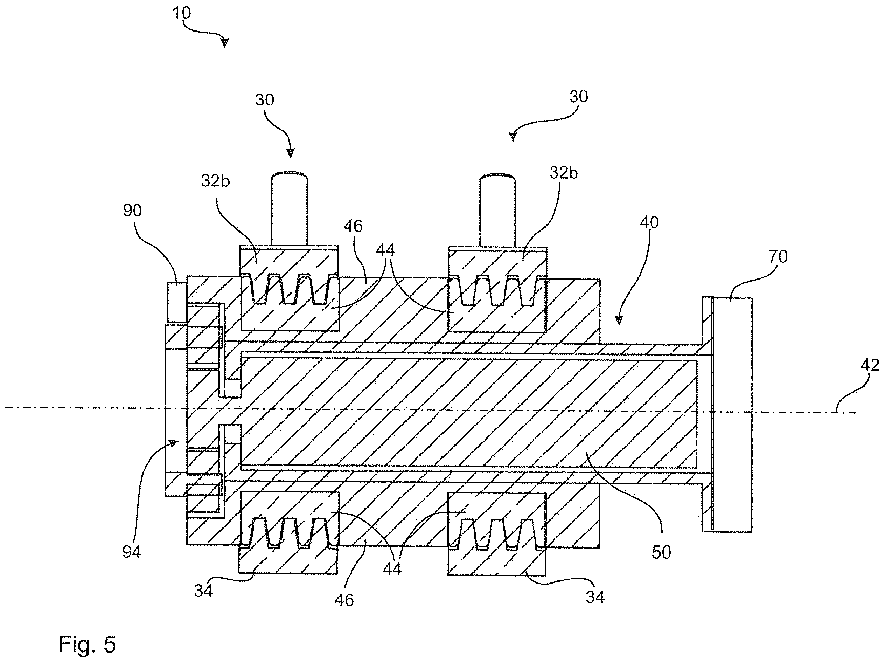

Wie hier weiter gut zu erkennen ist, weist hier der jeweilige Leiterkontakt 44a und 44b des Leiters 44 eine kammartige Struktur auf, die als Vorspannmittel 60 fungiert und entsprechend mit einer kammartigen Oberflächenstruktur der Ausgangskontakte 34 und der Eingangskontakte 32a kämmt, wie dies in der Fig. 5 zu erkennen ist. Wie ebenfalls zu erkennen ist, erstrecken sich die Leiter 44 entlang der Umfangsrichtung auf der Oberfläche des Rotationsbauteils, so dass der Innenraum innerhalb des Rotationsbauteils 40 freibleibt und hier für die Antriebsvorrichtung 50 in Form eines Elektromotors genutzt wird.

Wird nun erfindungsgemäß eine Schaltbewegung gewünscht, so wird die Antriebsvorrichtung 50 angesteuert, um über ein Getriebe 94 einer elektrischen Kupplungsvorrichtung 90 das Rotationsbauteil 40 rotatorisch zu bewegen. Bei einer Bewegung in Richtung der An-Position III wird dabei eine entsprechende mechanische Widerstandskraft in einer mechanischen Rückstellvorrichtung 70 überwunden, die dann anschließend als Rückstellkraft dort gespeichert zur Verfügung steht. In einer Not-Aus-Situation kann also diese mechanische Rückstellkraft aus der mechanischen Rückstellvorrichtung 70 zur Verfügung gestellt werden, um die Rückrotation des Rotationsbauteils 40 um die Schaltachse 42 gewährleisten zu können. Gleichzeitig kann über die elektrische Kupplungsvorrichtung 90 in einfacher und vor allem mit geringer Haltekraft ausgestatteter Weise eine Haltesituation sichergestellt werden, ohne dass die Antriebsvorrichtung 50 komplett über die gesamte Betriebsdauer die Rückstellbewegung durch die mechanische Rückstellvorrichtung 70 durch entsprechende Beaufschlagung mit einer Gegenkraft verhindern muss.

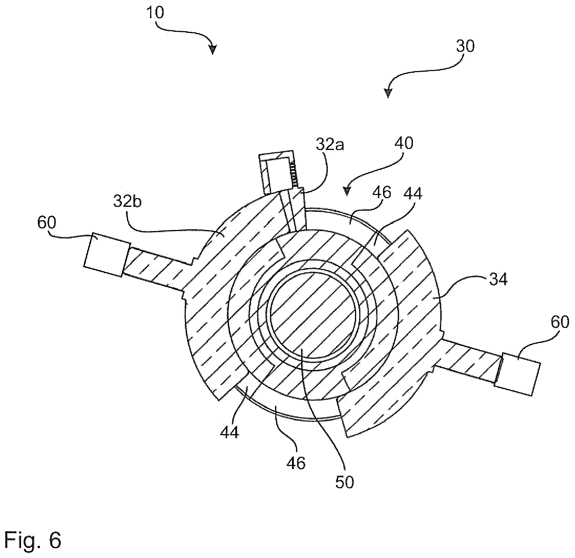

In der Fig. 6 ist darüber hinaus ein Querschnitt durch die Ausführungsform der Fig. 4 und 5 dargestellt, welche in Richtung der Schaltachse 42 ausgebildet ist. Hier sind nochmals zwei Vorspannmittel 60 in Form von Federvorrichtungen dargestellt, welche eine radiale Nachstellung und Beaufschlagung mit einer Vorspannkraft für den Ausgangskontakt 34 und den Eingangskontakt 32a gewährleisten. Hier ist auch zu erkennen, wie der erste Eingangskontakt 32a als zusätzliche Widerstandsbrücke ausgebildet ist, um eine entsprechende zweite Schaltposition gewährleisten zu können. Darüber hinaus ist hier in der seitlichen Ansicht auch gut zu erkennen, wie die Einbettung des Leiters 40 in entsprechend elektrisch isolierendes Material 46 vorliegt.

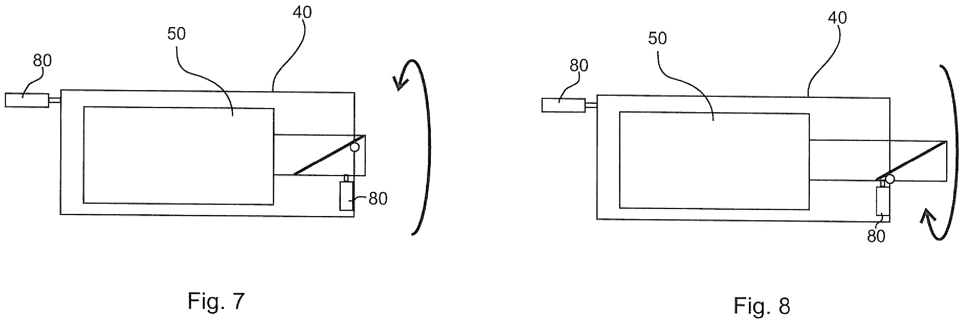

Die Fig. 7 und 8 zeigen eine alternative Möglichkeit einer Antriebsvorrichtung 50 in schematischer Weise. Hier kann nun mithilfe einer Translationsbewegung eines Hubmagneten über eine entsprechende schiefe Rampe oder schneckenförmige Ausbildung eine Rotationsbewegung des Rotationsbauteils 40 entlang des Rotationspfeils erzeugt werden. Gleichzeitig sind zwei Möglichkeiten von Notschaltvorrichtungen 80 dargestellt. Die Notschaltvorrichtung 80 rechts unten verwendet dabei einen Eingriff, welcher direkt eine Rotationsbewegung, insbesondere durch pyrotechnische Ausbildung, zur Verfügung stellt. Die Notschaltvorrichtung 80 am oberen linken Ende kann eine Translationsbewegung gewährleisten, welche damit ein seitliches Verschieben und damit ein seitliches Lösen der Kontakte in einer Notsituation erlaubt.

Die voranstehende Erläuterung der Ausführungsformen beschreibt die vorliegende Erfindung ausschließlich im Rahmen von Beispielen.

### Bezugszeichen

- 10: Elektrische Schaltvorrichtung
- 20: Gehäuse
- 30: Schaltabschnitt
- 32a: Eingangskontakt
- 32b: Eingangskontakt
- 34: Ausgangskontakt
- 40: Rotationsbauteil
- 42: Schaltachse
- 44: Leiter
- 44a: Leiterkontakt
- 44b: Leiterkontakt
- 46: elektrisch isolierendes Material
- 50: Antriebsvorrichtung
- 60: Vorspannmittel
- 70: mechanische Rückstellvorrichtung
- 80: Notschaltvorrichtung
- 90: elektrische Kupplungsvorrichtung
- 94: Getriebe

- I: Aus-Position
- II: Vorschalt-Position
- III: An-Position

## Patentansprüche

1. Elektrische Schaltvorrichtung (10) für einen Energiespeicher eines Elektrofahrzeugs, aufweisend ein Gehäuse (20), in welchem wenigstens ein Schaltabschnitt (30) mit zwei Eingangskontakten (32a, 32b) und wenigstens einem Ausgangskontakt (34) angeordnet ist, sowie ein Rotationsbauteil (40), welches relativ zum Gehäuse (20) zwischen wenigstens einer Aus-Position (I), einer Vorschalt-Position (II) und einer An-Position (III) drehbar um eine Schaltachse (42) gelagert ist, wobei das Rotationsbauteil (40) zumindest einen Leiter (44) aufweist mit wenigstens zwei Leiterkontakten (44a, 44b), welcher in der Vorschalt-Position (II) den ersten Eingangskontakt (32a) mit dem Ausgangskontakt (34) und in der An-Position (III) den zweiten Eingangskontakt (32b) mit dem Ausgangskontakt (34) des wenigstens einen Schaltabschnitts (30) elektrisch leitend verbindet, **dadurch gekennzeichnet, dass** zwischen einer Antriebsvorrichtung (50) für das Rotationsbauteil (40) und dem Rotationsbauteil (40) eine elektrische Kupplungsvorrichtung (90) angeordnet ist, welche eine Bewegung des Rotationsbauteils (40) in Richtung der Aus-Position (I) unter Bestromung sperrt und ohne Bestromung freigibt.

2. Elektrische Schaltvorrichtung (10) nach Anspruch 1 **dadurch gekennzeichnet, dass** eine Antriebsvorrichtung (50) für das Rotieren des Rotationsbauteils (40) vorgesehen ist.

3. Elektrische Schaltvorrichtung (10) nach Anspruch 2, **dadurch gekennzeichnet, dass** die Antriebsvorrichtung (50) einen Hubmagneten und eine Umsetzvorrichtung für die Umsetzung einer Translationsbewegung des Hubmagneten in eine Rotationsbewegung des Rotationsbauteils (40) aufweist.

4. Elektrische Schaltvorrichtung (10) nach einem der vorangegangenen Ansprüche, **dadurch gekennzeichnet, dass** die Leiterkontakte (44a, 44b), die Eingangskontakte (32a, 32b) und/oder der Ausgangskontakt (34) als flächige Kontaktabschnitte ausgebildet sind für eine elektrische Kontaktierung durch den Leiter (44) in wenigstens zwei Rotationspositionen des Rotationsbauteils (40).

5. Elektrische Schaltvorrichtung (10) nach einem der vorangegangenen Ansprüche, **dadurch gekennzeichnet, dass** die Leiterkontakte (44a, 44b) und/oder die Eingangskontakte (32a, 32b) und/oder der Ausgangskontakt (34) Vorspannmittel (60) aufweisen für eine vorgespannte Kontaktierung zwischen dem Ausgangskontakt (34) und einem Leiterkontakt (44a, 44b) und/oder zwischen einem Eingangskontakt (32a, 32b) und einem Leiterkontakt (44a, 44b).

6. Elektrische Schaltvorrichtung (10) nach einem der vorangegangenen Ansprüche, **dadurch gekennzeichnet, dass** das Rotationsbauteil (40) eine mechanische Rückstellvorrichtung (70) aufweist für eine Beaufschlagung des Rotationsbauteils (40) mit einer Rückstellkraft in Richtung der Aus-Position (I).

7. Elektrische Schaltvorrichtung (10) nach einem der vorangegangenen Ansprüche, **dadurch gekennzeichnet, dass** in dem Gehäuse (20) wenigstens zwei Schaltabschnitte (30) in Richtung der Schaltachse (42) axial versetzt zueinander angeordnet sind.

8. Elektrische Schaltvorrichtung (10) nach einem der vorangegangenen Ansprüche, **dadurch gekennzeichnet, dass** eine Notschaltvorrichtung (80) vorgesehen ist für ein hochenergetisches Trennen der elektrisch leitenden Verbindung durch den Leiter (44) mittels einer Bewegung des Rotationsbauteils (40).

9. Elektrische Schaltvorrichtung (10) nach einem der vorangegangenen Ansprüche, **dadurch gekennzeichnet, dass** die Kupplungsvorrichtung (90) eine Freilaufvorrichtung für die Antriebsvorrichtung (50) aufweist, welche die Antriebskraft der Antriebsvorrichtung (50) für eine Rotation in Richtung der An-Position (III) überträgt und in der Gegenrichtung einen Freilauf für die Antriebsvorrichtung (50) vorgibt.

10. Elektrische Schaltvorrichtung (10) nach einem der vorangegangenen Ansprüche, **dadurch gekennzeichnet, dass** die Kupplungsvorrichtung (90) ein Getriebe (94) aufweist für die Übertragung einer Antriebskraft der Antriebsvorrichtung (50) auf das Rotationsbauteil (40).

11. Elektrische Schaltvorrichtung (10) nach einem der vorangegangenen Ansprüche, **dadurch gekennzeichnet, dass** das Rotationsbauteil (40) wenigstens abschnittsweise aus einem leitenden Material ausgebildet ist, wobei die Leiterkontakte (44a, 44b) durch das Anordnen von elektrisch isolierendem Material (46) neben den Leiterkontakten (44a, 44b) ausgebildet werden.

12. Elektrische Schaltvorrichtung (10) nach einem der vorangegangenen Ansprüche, **dadurch gekennzeichnet, dass** der wenigstens eine Schaltabschnitt (30) zumindest einen dritten Eingangskontakt und/oder zumindest einen zweiten Ausgangskontakt (34) aufweist für eine elektrisch leitende Verbindung mittels dem Leiter (44) mit einem der folgenden Lichtbogen-löschenden elektrischen Bauteile:
- Freilaufdiode
- Schmelzsicherung
- Widerstand

13. Elektrische Schaltvorrichtung (10) nach einem der vorangegangenen Ansprüche, **dadurch gekennzeichnet, dass** der Leiter (44) wenigstens abschnittsweise entlang der Umfangsrichtung des Rotationsbauteils (40) zwischen den Leiterkontakten (44a, 44b) ausgerichtet ist.

14. Elektrische Schaltvorrichtung (10) nach einem der vorangegangenen Ansprüche, **dadurch gekennzeichnet, dass** der Leiter (44) einen Messabschnitt aufweist mit einem definierten elektrischen Widerstand, wobei eine Messvorrichtung für die Bestimmung des elektrischen Stroms im Messabschnitt vorgesehen ist.

15. Elektrische Schaltvorrichtung (10) nach einem der vorangegangenen Ansprüche, **dadurch gekennzeichnet, dass** die Leiterkontakte (44a, 44b) des Rotationsbauteils (40) zumindest abschnittsweise eine kammartige Struktur aufweisen, welche mit einer kammartigen Struktur der Eingangskontakte (32a, 32b) und dem wenigstens einen Ausgangskontakt (34) kontaktierend kämmen.

16. Verfahren für das Schalten einer elektrischen Schaltvorrichtung (10) gemäß Anspruch 1, aufweisend die folgenden Schritte:
- Überwachen der Aktivitätssituation des Elektrofahrzeugs auf ein Erkennen von einem Normalzustand, einem Notzustand und einem Crashzustand des Elektrofahrzeugs,
- Bewegen eines Rotationsbauteils (40) in eine Aus-Position (I) bei erkanntem Notzustand oder Crashzustand.

## Claims

1. Electrical switching device (10) for an energy store of an electric vehicle, having a housing (20) in which at least one switching section (30) with two input contacts (32a, 32b) and at least one output contact (34) is arranged, and having a rotary component (40), which is mounted relative to the housing (20) between at least one of an off position (I), a prior position (II) and an on position (III) so as to be rotatable about a switching axis (42), the rotary component (40) having at least one conductor (44) with at least two conductor contacts (44a, 44b), which, in the prior position (II), electrically conductively connects the first input contact (32a) to the output contact (34) and, in the on position (III), electrically connects the second input contact (32b) to the output contact (34) of the at least one switching section (30),
**characterized in that**
an electrical coupling device (90) is arranged between a drive device (50) for the rotary component (40) and the rotary component (40), and the electrical coupling device (90) blocks a movement of the rotary component (40) in the direction of the off-position (I) under energization and releases it without energization.

2. An electric switching device (10) according to claim 1,
**characterized in that**
a drive device (50) is provided for rotating the rotary component (40).

3. Electrical switching device (10) according to Claim 2,
**characterized in that**
the drive device (50) has a lifting magnet and a conversion device for converting a translational movement of the lifting magnet into a rotational movement of the rotary component (40).

4. Electrical switching device (10) according to one of the preceding claims,
**characterized in that**
the conductor contacts (44a, 44b), the input contacts (32a, 32b) and/or the output contact (34) are designed as flat contact sections for electrical contacting by the conductor (44) in at least two rotational positions of the rotary component (40).

5. Electrical switching device (10) according to one of the preceding claims,
**characterized in that**
the conductor contacts (44a, 44b) and/or the input contacts (32a, 32b) and/or the output contact (34) have biasing means (60) for a biased contacting between the output contact (34) and a conductor contact (44a, 44b) and/or between an input contact (32a, 32b) and a conductor contact (44a, 44b).

6. Electrical switching device (10) according to one of the preceding claims,
**characterized in that**
the rotary component (40) has a mechanical resetting device (70) for applying a resetting force in the direction of the off position (I) to the rotary component (40).

7. Electrical switching device (10) according to one of the preceding claims,
**characterized in that**
at least two switching sections (30) are arranged in the housing (20) axially offset with respect to one another in the direction of the switching axis (42).

8. Electrical switching device (10) according to one of the preceding claims,
**characterized in that**
an emergency switching device (80) is provided for high-energy disconnection of the electrically conductive connection through the conductor (44) by means of movement of the rotary component (40).

9. Electrical switching device (10) according to one of the preceding claims,
**characterized in that**
the coupling device (90) has a freewheel device for the drive device (50), which transfers the driving force of the drive device (50) for a rotation in the direction of the on-position (III) and prescribes a free wheel for the drive device (50) in the opposite direction.

10. An electric switching device (10) according to one of the preceding claims,
**characterized in that**
the coupling device (90) comprises a transmission (94) for transferring a driving force of the drive device (50) to the rotary component (40).

11. Electrical switching device (10) according to one of the preceding claims,
**characterized in that**
the rotary component (40) is formed at least in sections from a conductive material, the conductor contacts (44a, 44b) being formed by the arrangement of electrically insulating material (46) next to the conductor contacts (44a, 44b).

12. Electrical switching device (10) according to one of the preceding claims,
**characterized in that**
the at least one switching section (30) has at least one third input contact and/or at least one second output contact (34) for an electrically conductive connection by means of the conductor (44) to one of the following arc-quenching electrical components:
- Freewheeling diode
- Fuse
- Resistor

13. Electrical switching device (10) according to one of the preceding claims, **characterized in that**
the conductor (44) is aligned at least in sections along the circumferential direction of the rotary component (40) between the conductor contacts (44a, 44b).

14. Electrical switching device (10) according to one of the preceding claims,
**characterized in that**
the conductor (44) has a measuring section with a defined electrical resistance, a measuring device being provided for determining the electrical current in the measuring section.

15. Electrical switching device (10) according to one of the preceding claims,
**characterized in that**
the conductor contacts (44a, 44b) of the rotary component (40) have, at least in sections, a comb-like structure which meshes with a comb-like structure of the input contacts (32a, 32b) and the at least one output contact (34) in a contacting manner.

16. A method for switching an electrical switching device (10) according to claim 1, comprising the following steps:
- Monitoring the activity situation of the electric vehicle for detection of a normal condition, an emergency condition and a crash condition of the electric vehicle,
- Moving a rotary component (40) to an off position (I) when an emergency state or crash state is detected.

## Revendications

1. Dispositif de commutation électrique (10) pour un dispositif de stockage d'énergie d'un véhicule électrique, comportant un boîtier (20), dans lequel au moins une section de commutation (30) avec deux contacts d'entrée (32a, 32b) et au moins un contact de sortie (34), et un composant rotatif (40) qui est monté par rapport au boîtier (20) entre au moins une position d'arrêt (I), une position intermédiaire (II) et une position marche (III) autour d'un axe de commutation (42), le composant rotatif (40) comportant au moins un conducteur (44) avec au moins deux contacts de conducteur (44a, 44b) qui, dans la position intermédiaire (II), relie électriquement le premier contact d'entrée (32a) au contact de sortie (34) et, dans la position marche (III), relie le second contact d'entrée (32b) au contact de sortie (34) de la au moins une section de commutation (30),
**caractérisé en ce**
**qu'**un dispositif de couplage électrique (90) est agencé entre un dispositif d'entraînement (50) pour le composant rotatif (40) et le composant rotatif (40), lequel dispositif de couplage électrique (90) bloque un mouvement du composant rotatif (40) dans la direction de la position d'arrêt (I) sous alimentation en courant et le relâche sans alimentation en courant.

2. Dispositif de commutation électrique (10) selon la revendication 1, **caractérisé en ce qu'**un dispositif d'entraînement (50) est prévu pour faire tourner le composant rotatif (40).

3. Dispositif de commutation électrique (10) selon la revendication 2, **caractérisé en ce que** le dispositif d'entraînement (50) comporte un aimant de levage et un dispositif de conversion pour convertir un mouvement de translation de l'aimant de levage en un mouvement rotatif du composant rotatif (40).

4. Dispositif de commutation électrique (10) selon l'une des revendications précédentes,
**caractérisé en ce**
**que** les contacts de conducteur (44a, 44b), les contacts d'entrée (32a, 32b) et/ou le contact de sortie (34) sont conçus comme des sections de contact plates pour le contact électrique du conducteur (44) dans au moins deux positions de rotation du composant rotatif (40).

5. Dispositif de commutation électrique (10) selon l'une des revendications précédentes,
**caractérisé en ce**
**que** les contacts de conducteurs (44a, 44b) et/ou les contacts d'entrée (32a, 32b) et/ou le contact de sortie (34) présentent des moyens de précontrainte (60) pour un contact précontraint entre le contact de sortie (34) et un contact de conducteur (44a, 44b) et/ou entre un contact d'entrée (32a, 32b) et un contact de conducteur (44a, 44b).

6. Dispositif de commutation électrique (10) selon l'une des revendications précédentes,
**caractérisé en ce**
**que** le composant rotatif (40) présente un dispositif de réarmement mécanique (70) pour appliquer une force de réarmement dans la direction de la position d'arrêt (I) au composant rotatif (40).

7. Dispositif de commutation électrique (10) selon l'une des revendications précédentes,
**caractérisé en ce**
**qu'**au moins deux sections de commutation (30) sont disposées dans le boîtier (20) décalées axialement l'une par rapport à l'autre en direction de l'axe de commutation (42).

8. Dispositif de commutation électrique (10) selon l'une des revendications précédentes,
**caractérisé en ce**
**qu'**un dispositif de commutation de secours (80) est prévu pour la déconnexion à haute énergie de la connexion électriquement conductrice par le conducteur (44) au moyen du mouvement du composant rotatif (40).

9. Dispositif de commutation électrique (10) selon l'une des revendications précédentes,
**caractérisé en ce**
**que** le dispositif de couplage (90) comporte un dispositif de roue libre pour le dispositif d'entraînement (50), qui transmet la force motrice du dispositif d'entraînement (50) en rotation dans la direction de la position marche (III) et prescrit une roue libre au dispositif d'entraînement (50) dans la direction opposée.

10. Dispositif de commutation électrique (10) selon l'une des revendications précédentes,
**caractérisé en ce**
**que** le dispositif de couplage (90) comprend une transmission (94) pour transmettre une force motrice du dispositif d'entraînement (50) au composant rotatif (40).

11. Dispositif de commutation électrique (10) selon l'une des revendications précédentes,
**caractérisé en ce**
**que** le composant rotatif (40) est formé au moins par sections en un matériau conducteur, les contacts de conducteurs (44a, 44b) étant formés par la disposition de matériau électriquement isolant (46) à côté des contacts de conducteurs (44a, 44b).

12. Dispositif de commutation électrique (10) selon l'une des revendications précédentes,
**caractérisé en ce**
**que** la au moins une section de commutation (30) présente au moins un troisième contact d'entrée et/ou au moins un deuxième contact de sortie (34) pour une connexion électriquement conductrice au moyen du conducteur (44) à un des composants électriques suivants pour la trempe d'arc :
- Diode de roue libre
- Mèche
- Résistance

13. Dispositif de commutation électrique (10) selon l'une des revendications précédentes,
**caractérisé en ce**
**que** le conducteur (44) est aligné au moins par sections le long de la direction circonférentielle du composant rotatif (40) entre les contacts de conducteurs (44a, 44b).

14. Dispositif de commutation électrique (10) selon l'une des revendications précédentes,
**caractérisé en ce**
**que** le conducteur (44) présente une section de mesure avec une résistance électrique définie, un dispositif de mesure étant prévu pour déterminer le courant électrique dans la section de mesure.

15. Dispositif de commutation électrique (10) selon l'une des revendications précédentes,
**caractérisé en ce**
**que** les contacts de conducteurs (44a, 44b) du composant rotatif (40) présentent, au moins par sections, une structure en forme de peigne qui s'engrène avec une structure en forme de peigne des contacts d'entrée (32a, 32b) et le au moins un contact de sortie (34) en contact.

16. Procédé de commutation d'un dispositif de commutation électrique (10) selon la revendication 1, comprenant les étapes suivantes :
- Surveillance de la situation d'activité du véhicule électrique pour la détection d'une condition normale, d'une condition d'urgence et d'une condition de collision du véhicule électrique,
- Déplacement d'un composant rotatif (40) en position d'arrêt (I) lorsqu'un état d'urgence ou d'accident est détecté.
